# FASCICULE DE BREVET EUROPEEN

(11) **EP 3 160 884 B1**
(45) Date de publication et mention de la délivrance du brevet: **23.05.2018**
(21) Numéro de dépôt: 15747752.2
(22) Date de dépôt: 24.06.2015
(51) Int. Cl.: B65H 3/24, B65H 83/02, B65H 1/26

(54) **PROCEDE ET DISPOSITIF POUR ALIMENTER UNE MACHINE AVEC DES ELEMENTS EN PLAQUE.**
VERFAHREN UND VORRICHTUNG ZUM ZUFÖRDERN VON ZUSCHNITTEN ZU EINE MASCHINE
METHOD AND DEVICE FOR SUPPLYING A MACHINE WITH BLANKS

(30) Priorité: 27.06.2014 EP 14002202
(43) Date de publication de la demande: 03.05.2017
(73) Titulaire: BOBST MEX SA, 1031 Mex (CH)
(72) Inventeur: CHIARI, Mauro, CH-1026 Denges (CH); CAZES, Daniel, 1046 Rueyres (CH)
(74) Mandataire: Ehnle, Marcus
(86) Numéro de dépôt international: PCT/EP2015/025038
(87) Numéro de publication internationale: WO 2015/197199

(56) Documents cités:
- WO-A1-2010/105762
- US-A1- 2009 115 122
- US-A1- 2011 268 550

## Description

La présente invention concerne un procédé pour alimenter une machine de traitement d'éléments en plaque avec des éléments en plaque. L'invention se rapporte à une station d'alimentation d'une machine de traitement d'éléments en plaque avec des éléments en plaque. L'invention concerne également une machine de traitement d'éléments en plaque équipée avec une telle station d'alimentation avec de tels éléments en plaque.

Une machine de traitement, par exemple une machine de découpe ou d'impression, est utilisée dans l'industrie de l'emballage, par exemple pour découper ou imprimer des éléments en plaque tels que des feuilles de carton. Ces feuilles imprimées servent ensuite à confectionner des boîtes en carton.

La machine de traitement comprend généralement plusieurs postes ou station de travail, chacun destiné à réaliser une opération déterminée. Les éléments en plaque sont introduits à l'entrée de la machine par une station d'introduction ou introducteur installé en amont. Ces éléments en plaque sont récupérés à la sortie de la machine dans la station de réception en aval sous la forme d'éléments traités, de poses ou de boîtes prêtes à l'emploi.

### Etat de la technique

L'introducteur fait rentrer automatiquement les éléments les uns après les autres dans la machine. Un paquet d'éléments empilés est placé dans l'introducteur. L'introducteur comprend tout d'abord un transport vacuum inférieur. L'introducteur comprend également une jauge verticale. La jauge sert au taquage frontal des éléments. Cette jauge sert également à l'extraction des éléments les uns après les autres à partir du dessous du paquet. Le transport vacuum envoie les éléments dans la machine séparément et successivement les uns après les autres. Les éléments sont ensuite entraînés et traités les uns à la suite des autres dans la machine.

Un premier inconvénient est que le paquet exerce une force de pression importante, surtout sur l'élément du bas du paquet posé sur le transport. Cette pression est d'autant plus élevée que le carton possède un fort grammage et que la hauteur du paquet est importante. Cette pression a tendance à écraser ces éléments du bas se succédant et à exercer une contrainte, perturbant le transport de l'élément par l'introducteur, diminuant la qualité de l'introduction et par voie de conséquence l'envoi des éléments dans la machine. Dans certains cas, le registre des éléments introduits est perdu. Dans d'autres cas, l'introducteur fait rentrer d'un seul coup deux éléments au lieu d'un seul, ce qui n'est pas souhaitable.

Une telle pression augmente aussi les frottements entre l'élément du bas de pile et l'élément immédiatement au-dessus avec lequel il est en contact, lors de l'envoi de l'élément du bas. Les surfaces pouvant être pré-imprimées ou revêtues d'un couchage, par exemple de couleur blanche ou d'autres couleurs encore, vont être détériorées par du marquage.

Pour alimenter la machine, un opérateur place continuellement de petits paquets d'éléments empilés dans l'introducteur. L'opérateur saisi et porte à la main ces paquets. Ceci rend le travail de l'opérateur particulièrement pénible, par exemple dans le cas de traitement de feuilles de carton ondulé de grandes dimensions. De plus, un tel chargement manuel limite la capacité en termes de vitesses de traitement.

De plus, en cas de cadences rapides, le paquet d'éléments va très rapidement diminuer et va nécessiter un réapprovisionnement immédiat. L'intervalle entre un passage d'une première pile et la pile suivante va générer un approvisionnement discontinu en éléments. Le non-stop n'est pas possible.

Pour assurer une cadence rapide de la machine de traitement, une station de chargement est le plus souvent intégrée à la machine, en amont de la station d'introduction. La station de chargement comprend un chargeur de pile d'éléments en plaques. Les documents US 8'113'503 et WO 2010/105'762 décrivent une station de chargement d'éléments en plaque, à partir d'une pile initiale d'éléments disposée dans un magasin vers une station d'introduction pour une machine de traitement des éléments. La station comprend des moyens de déchargement, déchargeant des éléments à partir de la pile initiale, et des moyens de stockage intermédiaire, stockant les éléments déchargés sous la forme d'un paquet intermédiaire. Des moyens de transport transportent les éléments sous la forme d'une nappe à partir des moyens de stockage vers la station d'introduction.

Cependant une telle station constitue un équipement supplémentaire qui vient se rajouter à la machine de traitement. L'encombrement total de la machine accompagnée de sa station devient important. Avec une station, il reste toujours nécessaire de former un nouveau paquet dans l'introducteur, en plus du paquet intermédiaire. Le rajout d'une station de chargement se justifie uniquement pour des volumes et des cadences de fonctionnement importantes de la machine de traitement.

### Exposé de l'invention

Un objectif principal de la présente invention consiste à mettre au point un procédé pour alimenter une machine de traitement d'éléments en plaque. Un deuxième objectif est de réaliser une station d'alimentation destinée à une machine de traitement d'éléments en plaque. Un troisième objectif est de résoudre les problèmes techniques mentionnés pour la station d'introduction et la station de chargement de l'état de la technique. Un autre objectif encore est celui de réussir à insérer une station d'alimentation en amont d'une machine de production d'emballage.

Conformément à un aspect de la présente invention, un procédé pour alimenter une machine de traitement d'éléments en plaque avec des éléments en plaque, à partir d'une pile initiale d'éléments en plaque comprend plusieurs étapes, consistant:
- à pousser un premier paquet d'éléments en plaque vers l'aval, à partir du dessus de la pile initiale d'éléments en plaque, et jusqu'à ce que le premier paquet d'éléments en plaque vienne au niveau de moyens de stockage, qui sont aptes à stocker le premier paquet d'éléments en plaque poussé;
- et à déplacer les moyens de stockage vers l'aval sur la distance correspondant à la longueur du premier paquet d'éléments en plaque, simultanément l'étape consistant à pousser le premier paquet d'éléments en plaque vers l'aval sur une distance correspondant à la longueur du premier paquet d'éléments en plaque, de façon à séparer le premier paquet d'éléments en plaque de la pile initiale d'éléments en plaque;
- à transférer les éléments en plaque du premier paquet d'éléments en plaque les uns à la suite des autres jusqu'à la machine de traitement d'éléments en plaque.

Dans l'ensemble de la description, l'élément en plaque est défini, à titre d'exemple non exhaustif, comme étant en un matériau tel que du papier, du carton plat, du carton ondulé, du carton ondulé contrecollé, du plastique flexible, par exemple du polyéthylène (PE), du polyéthylène téréphtalate (PET), du polypropylène biorienté (BOPP), ou d'autres polymères, ou d'autres matériaux encore.

La machine de traitement est définie, à titre d'exemple non exhaustif, comme étant une machine de découpe, par exemple une machine de découpe à platine, une machine de refoulage, de gaufrage, de structuration, d'estampage par exemple à chaud connu sous la dénomination de hot foil stamping, de collage d'étiquettes ou d'hologrammes, une machine plieuse-colleuse, une machine d'impression, avec au moins un groupe imprimeur, par exemple de flexographie, d'héliographie, d'offset, d'impression digitale à jet d'encre, ou d'autres encore.

La direction longitudinale est définie en faisant référence au sens de déplacement de l'élément dans la machine, selon son axe longitudinal médian. Les sens amont et aval sont définis en faisant référence au sens de déplacement de l'élément en plaque, suivant la direction longitudinale dans la station d'alimentation et dans l'ensemble de la machine de traitement.

Autrement dit, une fois que le premier paquet est poussé et stabilisé, les éléments en plaque sont directement envoyés élément par élément dans la machine, qui effectue ensuite directement leur traitement les uns après les autres. Avec un tel procédé, le paquet d'éléments en plaque est poussé et accompagné vers et par les moyens de stockage. Le paquet d'éléments en plaque est maintenu au niveau des moyens de stockage. Le transfert des éléments en plaque les uns après les autres est assuré en non-stop, les piles initiales étant régulièrement réapprovisionnées, pour assurer la continuité d'alimentation de la machine et ainsi de la production.

Dans un autre aspect de l'invention, une station d'alimentation d'une machine de traitement d'éléments en plaque avec des éléments en plaque, à partir d'une pile initiale d'éléments en plaque disposée dans un magasin, comprend:
- un pousseur, apte à pousser vers l'aval un paquet d'éléments en plaque, à partir du sommet de la pile initiale d'éléments en plaque,
- des moyens de stockage, aptes à réceptionner et à stocker le paquet d'éléments en plaque poussé, ces moyens de stockage étant positionnés en aval du pousseur, et
- des moyens de transfert, aptes à transférer les éléments en plaque les uns à la suite des autres, à partir des moyens de stockage jusqu'à la machine de traitement d'éléments en plaque.

La station est caractérisée en ce qu'elle comprend des moyens des moyens de déplacement, aptes à déplacer simultanément de l'amont vers l'aval les moyens de stockage et les moyens de transfert sur une distance correspondant à la longueur du paquet d'éléments en plaque poussé, de façon à permettre au pousseur et aux moyens de stockage de séparer le paquet d'éléments en plaque de la pile initiale d'éléments en plaque, et à conserver le paquet d'éléments en plaque au niveau des moyens de stockage et des moyens de transfert.

Le paquet d'éléments en plaque est ainsi correctement rangé et étant taqué à l'avant par les moyens de stockage, et à l'arrière par le pousseur. Les moyens de stockage se déplacent selon le format du paquet d'éléments en plaque et donc des éléments en plaque qui le constituent. La formation de nappe d'éléments en plaque est évitée, ce qui rend la station d'alimentation plus compacte.

Selon un autre aspect encore de l'invention, une machine de traitement pour des éléments en plaque est caractérisée en ce qu'elle est équipée avec une station d'alimentation telle que décrite ci-dessous et revendiquée.

### Brève description des dessins

L'invention sera bien comprise et ses divers avantages et différentes caractéristiques ressortiront mieux lors de la description suivante, de l'exemple non limitatif de réalisation, en référence aux dessins schématiques annexés, dans lesquels:
- la Figure 1 représente une vue latérale d'une machine de traitement pour des éléments en plaque équipée avec une station d'alimentation selon l'invention; et
- les Figures 2 à 6 représentent des vues latérales de la station dans les différentes positions de fonctionnement.

### Exposé détaillé de modes de réalisation préférés

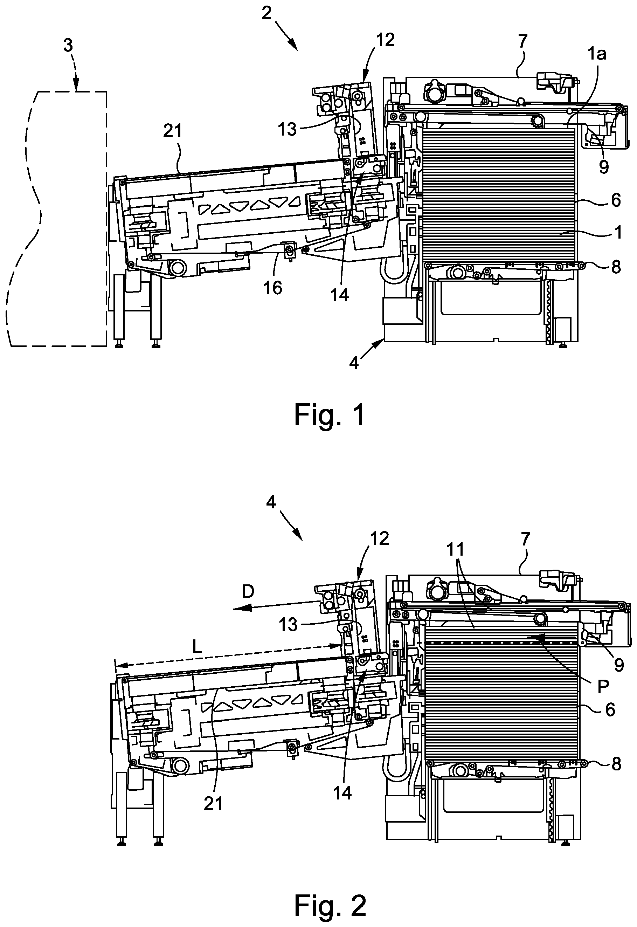

Comme l'illustre la Fig. 1, une machine de traitement d'éléments en plaque, par exemple des feuilles de carton 1, se présente sous la forme d'une machine d'impression digitale à jet d'encre 2. La machine d'impression 2 comprend un bâti 3 (représenté en traits tillés) et différents groupes d'impression, tels que des têtes d'impression jet d'encre placées en ligne les uns à la suite des autres. Les feuilles 1 sont traitées en étant imprimées. Les feuilles 1 sont saisies, transportées, circulent en passant au niveau de chacune des têtes au travers de la machine d'impression 2 et sortent au niveau d'une station de réception.

La machine pour imprimer les feuilles est avantageusement équipée avec une station d'alimentation 4. Cette station 4 est montée en amont de la machine d'impression 2, de façon à alimenter cette dernière en feuilles 1 à haute cadence. L'axe longitudinal médian de la station 4 est aligné avec l'axe longitudinal médian de la machine 2. Dans la machine 2, une unité d'alignement latéral (non représentée) des feuilles 1 peut être disposée en aval de la station d'alimentation 4.

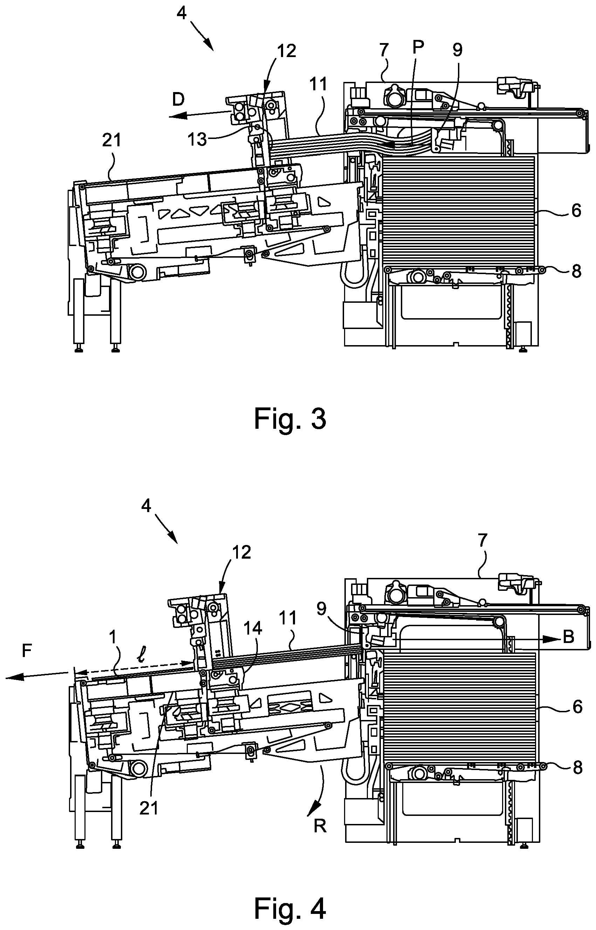

Les feuilles 1 arrivent au départ dans la station 4 en une pile verticale initiale principale 6 placée dans un magasin de stockage principal 7 situé en amont. Les feuilles 1 partent de ce magasin 7 et sortent de la station 4 en aval pour rentrer dans la machine 2. Le sens d'avance ou de défilement (Flèche F dans les Figs. 4 à 6), aussi appelé trajet de convoyage ou sens passage carton, pour les feuilles 1 suivant la direction longitudinale, indique le sens amont et le sens aval.

Le magasin 7, et ainsi la station 4, peut comprendre un chargeur de pile (non visible) pour la pile 6 de feuilles 1. Le chargeur est du type monte-pile avec un mécanisme élévateur de pile, qui comprend un plateau de levage 8, sensiblement horizontal, supportant la pile 6 de feuilles 1. Le plateau de levage 8 est entraîné verticalement par le mécanisme élévateur. Le mécanisme élévateur comprend un moteur électrique, faisant monter ou descendre verticalement le plateau 8. Le moteur permet également de connaître et d'assurer le positionnement précis du plateau 8.

Le plateau 8 remonte au fur et à mesure du départ des feuilles 1 vers l'aval. Pour recharger une nouvelle pile 6 de feuilles 1 sur le plateau 8 pour alimenter la station 4, le plateau 8 descend grâce au mécanisme élévateur.

La station 4 comprend un pousseur 9. Le pousseur 9 se déplace de l'amont vers l'aval en poussant (Flèche P en Figs. 2 et 3) un paquet de feuilles 11 pris à partir du sommet de la pile 6. Le pousseur 9 revient ensuite à vide en sens inverse de l'aval vers l'amont une fois que le paquet poussé 11 est stabilisé.

Le magasin 7 avec son chargeur de pile, et ainsi la station 4, peut comprendre un capteur de sommet de pile 6 (non représenté). Le capteur de sommet de pile peut être connecté à une entrée d'un calculateur. Le calculateur peut agir sur le mécanisme élévateur, pour maintenir les feuilles supérieures successives 1a à un niveau constant après chaque départ d'un paquet 11. Le calculateur est programmé pour que le signal apparaissant à sa sortie soit caractéristique de la différence entre le niveau du sommet de la pile 6 mesuré et une consigne calculée sur la base de l'épaisseur du paquet 11.

La station 4 comprend des moyens de stockage 12, qui sont aptes à stocker le paquet poussé 11. Les moyens de stockage 12 sont positionnés en aval du pousseur 9. Ces moyens de stockage 12 peuvent présenter sous la forme d'un organe de positionnement avant des paquets 11. L'organe de positionnement sert à maintenir un blocage du premier paquet 11, ainsi que des paquets suivant arrivant par la suite en étant poussé par le pousseur 9. L'organe de positionnement est par exemple du type jauge frontale et verticale 13. La jauge 13 sert au taquage frontal du paquet 11 et ainsi des feuilles 1. Cette jauge 13 sert également à l'extraction des feuilles 1 les unes après les autres à partir du dessous du paquet 11 (voir Fig. 4). Une fente est laissée sous la jauge 13, et les feuilles 1 circulent les unes à la suite des autres par cette fente. Cette fente est à hauteur variable, choisie en fonction de l'épaisseur des feuilles 1.

La station 4 comprend des moyens de transfert 14, aptes à transférer les feuilles 1, les unes à la suite des autres, à partir des moyens de stockage 12 jusqu'au restant de la machine 2. Pour ce faire, les moyens de transfert 14 peuvent comprendre un convoyeur à vacuum à courroie sans fin. Les feuilles 1 du paquet 11 sont prises une par une du dessous du paquet 11. Le convoyeur à vacuum saisi chaque feuille par sa partie inférieure avant et l'envoie vers l'aval. De manière avantageuse, les moyens de stockage 12 sont solidarisés aux moyens de transfert 14.

Selon l'invention, la station 4 comprend des moyens de déplacement 16, aptes à déplacer simultanément de l'amont vers l'aval les moyens de stockage 12 et les moyens de transfert 14 (Flèche D en Figs. 2 et 3). Le déplacement se fait sur une distance qui correspond à la longueur du paquet poussé 11. Ce déplacement se fait en même temps que le mouvement vers l'aval du pousseur 9. Ce déplacement permet de séparer un premier paquet 11 de la pile 6 et à conserver le premier paquet 11 au niveau des moyens de stockage 12 et des moyens de transfert 14.

La station 4 comprend favorablement des moyens 17 pour soutenir le premier paquet 11. Ces moyens de soutien 17 sont positionnés entre le pousseur 9 et les moyens de stockage 12. Les moyens de soutien 17 sont aptes à se déployer en fonction de la longueur du premier paquet poussé 11. Ces moyens de soutien 17 se présentent par exemple sous la forme d'un ou plusieurs rouleaux sur lesquels vient s'appuyer la feuille inférieure 1 du premier paquet 11.

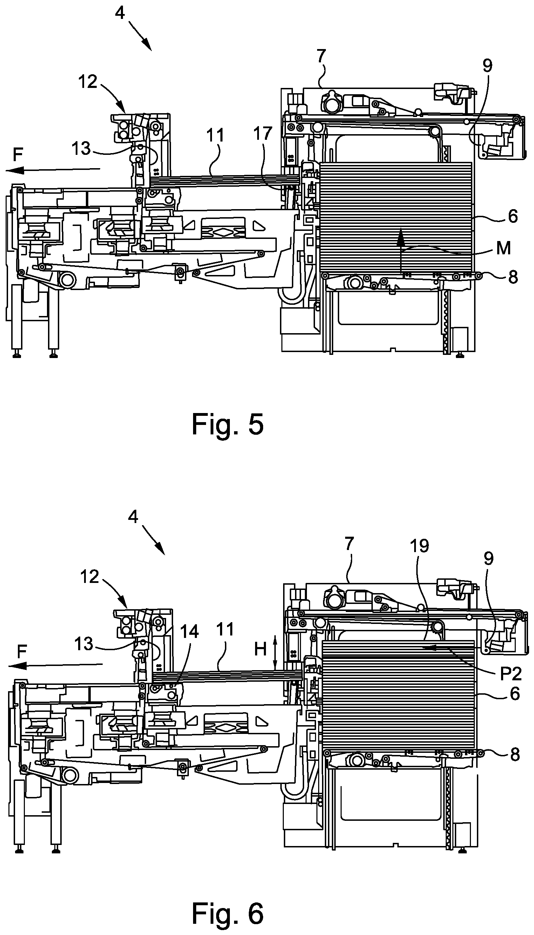

De préférence, la station 4 comprend des moyens 18 pour faire varier en même temps la hauteur (H en Fig. 6) des moyens de stockage 12, des moyens de transfert 14 et par voie de conséquence du premier paquet 11 qui vient d'être poussé. Cette hauteur H est réglable en fonction de l'épaisseur du deuxième paquet ultérieur 19 qui va être poussé par la suite par le pousseur 9, après le premier paquet 11. Ceci va permettre de pousser le deuxième paquet 19 qui va glisser directement sur le premier paquet 11 déjà en place au niveau des moyens de stockage 12. Cette hauteur H étant adaptée, les feuilles 1 du deuxième paquet 19 ne vont pas être abimées par une chute sur les feuilles 1 du premier paquet 11.

De manière avantageuse, la station 4 comprend un transporteur à longueur variable 21. Le transporteur 21 est positionné en aval des moyens de stockage 12 et des moyens de transfert 14, i.e. en aval de la jauge 13. Le transporteur 21 attrape directement une à une les feuilles 1 transférées par le convoyeur des moyens de transfert 14 et les transporte en aval F vers la machine 2. Le transporteur 21 est solidarisé aux moyens de stockage 12 et aux moyens de transfert 14. Les moyens de stockage 12, les moyens de transfert 14 et le transporteur 21 présentent une configuration inclinée vers le haut et vers l'arrière. Cette inclinaison permet de favoriser le poussage et l'arrivée du premier paquet 11 au niveau des moyens de stockage 12.

Le transporteur 21 présente une longueur (I et L en Figs. 2 et 4) qui est fonction de la longueur du premier paquet 11 et qui est fonction de la course maximale prévue pour le déplacement des moyens de stockage 12 et des moyens de transfert 14. Avant le poussage du premier paquet 11, le transporteur 21 présente une longueur de dimension maximale L (Fig. 2). Après le poussage du premier paquet 11, le transporteur 21 présente une longueur de dimension minimale I (Fig. 4). Le transporteur 21 peut être formé avec des caissons à vide coulissant à longueur variable et une courroie sans fin.

De manière favorable, les moyens 18 pour faire varier la hauteur des moyens de stockage 12 sont aptes à faire pivoter (Flèche R en Fig. 4) les moyens de transfert 14, les moyens de stockage 12 et le transporteur 21. Le pivotement R se fait par rapport à un axe situé au niveau de l'extrémité aval du transporteur 21. Le premier paquet 11 va ainsi passer de sa position légèrement inclinée vers le haut et l'arrière pour venir se placer sensiblement à l'horizontal. Cette nouvelle position du premier paquet 11 va faciliter le glissement du deuxième paquet 19 sur ce premier paquet 11.

Un procédé pour alimenter la machine de traitement de feuille 2 avec des feuilles 1 provenant de la pile initiale 6 de feuilles 1 comprend plusieurs étapes successives mises en oeuvre par la station d'alimentation 4.

Une première étape consiste à actionner le pousseur 9 (Fig. 2) et à pousser P (Fig. 3) vers l'aval le premier paquet de feuilles 11 extrait à partir du dessus de la pile 6 placée dans le magasin 7. Le pousseur 9 pousse jusqu'à ce que le premier paquet 11 vienne en butée contre l'organe de positionnement avant, i.e. la jauge 13.

Une deuxième étape consiste à déplacer D les moyens de stockage 12, i.e. la jauge 13 vers l'aval sur une distance déterminée correspondant à la longueur du premier paquet 11. Cette deuxième étape est implémentée simultanément avec la première étape. Dans cette première et deuxième étape, le pousseur 9 se déplace en poussant le premier paquet 11 sur une distance déterminée qui correspond à la longueur du premier paquet 11. Par voie de conséquence, les moyens de transfert 14 se déplacent D de manière analogue. Le premier paquet 11 est séparé de la pile 6.

Une troisième étape consiste à actionner les moyens de transfert 14 de façon à transférer F les unes à la suite des autres les feuilles 1 du premier paquet 11 qui se trouve maintenant en position poussée. Les feuilles 1 sont ainsi transférées des moyens de stockage 12 sur le transporteur 21.

Une fois le premier paquet 11 poussé, stabilisé avec les feuilles déjà en cours de transfert, le pousseur 9 revient vers l'amont dans sa position initiale (Flèche B en Fig. 4).

Le procédé pour alimenter la machine de traitement de feuille 2 avec des feuilles 1 comprend en outre favorablement deux autres étapes supplémentaires. Ces deux étapes sont placées après l'étape consistant à transférer les feuilles 1. La première de ces deux étapes consiste à abaisser la hauteur de moyens de stockage 12 selon une hauteur H. Cette hauteur H correspondant sensiblement à l'épaisseur du deuxième paquet 19. Cette étape pour abaisser la hauteur peut se faire par pivotement R de l'ensemble de la structure portant les moyens de stockage 12, les moyens de transfert 14 et le transporteur 21. La deuxième de ces deux étapes consiste à remonter la pile 6 selon une hauteur H correspondant à l'épaisseur du deuxième paquet 19. Le plateau 8 du magasin 7 monte (Flèche M en Fig. 5).

Le procédé la machine de traitement de feuille 2 avec des feuilles 1 comprend de préférence en outre trois étapes supplémentaires. Ces trois étapes sont placées après l'étape consistant à transférer les feuilles 1. La première de ces trois étapes consiste à actionner le pousseur 9 et à pousser le deuxième paquet 19 vers l'aval (Flèche P2 en Fig. 6) sur une distance correspondant à la longueur du deuxième paquet 19, pour séparer le deuxième paquet 19 de la pile 6. La deuxième de ces trois étapes consiste à remonter M la pile 6 selon une hauteur correspondant à l'épaisseur du deuxième paquet 19, et simultanément à transférer les feuilles 1. La troisième de ces trois étapes consiste à répéter les étapes précédentes consistant à pousser le paquet ultérieur 19 et à remonter la pile 6, jusqu'à ce que la pile 6 de feuilles 1 soit terminée.

La présente invention n'est pas limitée aux modes de réalisation décrits et illustrés. De nombreuses modifications peuvent être réalisées, sans pour autant sortir du cadre défini par la portée du jeu de revendications.

La machine de traitement peut également être une machine d'impression de feuilles de carton, par exemple en flexographie, avec une série de groupes imprimeurs disposés en ligne. La machine de traitement peut également être une machine de découpe et de refoulage de feuilles de carton à platine.

## Revendications

1. Procédé pour alimenter une machine de traitement d'éléments en plaque (2) avec des éléments en plaque (1), à partir d'une pile initiale d'éléments (6), comprenant les étapes consistant:
- à pousser (P) un premier paquet d'éléments (11) vers l'aval, à partir du dessus de la pile (6), jusqu'à ce que le premier paquet (11) vienne au niveau de moyens de stockage (12), aptes à stocker le premier paquet poussé (11), et simultanément,
- à déplacer (D) les moyens de stockage (12) vers l'aval sur une distance déterminée correspondant à la longueur du premier paquet (11), pour séparer le premier paquet (11) de la pile (6), puis
- à transférer (F) les éléments (1) du premier paquet (11) les uns à la suite des autres jusqu'à la machine (2).

2. Procédé selon la revendication 1, **caractérisé en ce qu'**il comprend en outre les étapes supplémentaires, placées après l'étape consistant à transférer (F) les éléments (1), consistant:
- à abaisser la hauteur de moyens de stockage (12) selon une hauteur (H) correspondant à l'épaisseur d'un paquet ultérieur (19), et
- à remonter la pile (6) selon une hauteur correspondant à l'épaisseur du paquet ultérieur (19).

3. Procédé selon la revendication 1 ou 2, **caractérisé en ce qu'**il comprend en outre les étapes supplémentaires, placées après l'étape consistant à transférer (F) les éléments (1), consistant:
- à pousser (P2) un paquet ultérieur (19) vers l'aval sur une distance correspondant à la longueur du paquet ultérieur (19), pour séparer le paquet ultérieur (19) de la pile (6),
- à remonter la pile (6) selon une hauteur correspondant à l'épaisseur du paquet ultérieur (19), et simultanément à transférer les éléments (1), et
- à répéter les étapes consistant à pousser (P2) le paquet ultérieur (19) et à remonter la pile (6), jusqu'à ce que la pile (6) soit terminée.

4. Station d'alimentation d'une machine de traitement d'éléments en plaque (2) avec des éléments en plaque (1), à partir d'une pile initiale (6) d'éléments (1) disposée dans un magasin (7), comprenant:
- un pousseur (9), apte à pousser vers l'aval (P) un paquet d'éléments (11), à partir du sommet de la pile (6),
- des moyens de stockage (12), aptes à stocker le paquet (11), et positionnés en aval du pousseur (9), et
- des moyens de transfert (14), aptes à transférer (F) les éléments (1) les uns à la suite des autres, à partir des moyens de stockage (12) jusqu'à la machine (2),
**caractérisée en ce qu'**elle comprend des moyens de déplacement (16), aptes à déplacer simultanément de l'amont vers l'aval les moyens de stockage (12) et les moyens de transfert (14) sur une distance correspondant à la longueur du paquet (11), de façon à permettre au pousseur (9) et aux moyens de stockage (12) de séparer le paquet (11) de la pile (6) et à conserver le paquet (11) au niveau des moyens de stockage (12) et des moyens de transfert (14).

5. Station selon la revendication 4, **caractérisée en ce qu'**elle comprend des moyens (17) pour soutenir le paquet (11), positionnés entre le pousseur (9) et les moyens de stockage (12), et aptes à se déployer en fonction de la longueur du paquet (11).

6. Station selon la revendication 4 ou 5, **caractérisée en ce qu'**elle comprend des moyens (18) pour faire varier la hauteur (H) des moyens de stockage (12), des moyens de transfert (14) et du paquet (11), en fonction de l'épaisseur du paquet ultérieur (19).

7. Station selon l'une quelconque des revendications 4 à 6, **caractérisée en ce qu'**elle comprend un transporteur à longueur variable (21), positionné en aval des moyens de stockage et de transfert (12, 14), et présentant une longueur qui est fonction de la longueur du paquet (11).

8. Station selon la revendication 7, **caractérisée en ce que** les moyens (18) pour faire varier la hauteur des moyens de stockage (12) sont aptes à faire pivoter (R) les moyens de transfert (14), les moyens de stockage (12) et le transporteur (21), par rapport à un axe situé au niveau de l'extrémité aval du transporteur (21).

9. Station selon l'une quelconque des revendications 4 à 8, **caractérisée en ce que** les moyens de stockage (12) se présentent sous la forme d'un organe de positionnement avant (13), de façon à maintenir un blocage du paquet (11, 19).

10. Station selon l'une quelconque des revendications 4 à 9, **caractérisée en ce que** les moyens de stockage (12) sont solidarisés aux moyens de transfert (14).

11. Station selon l'une quelconque des revendications 4 à 10, **caractérisée en ce que** le magasin (7) comprend un mécanisme élévateur de pile (6), apte à remonter verticalement un plateau de levage (8) de pile (6).

12. Machine de traitement pour des éléments en plaque, **caractérisée en ce qu'**elle est équipée avec une station d'alimentation (4) selon l'une quelconque des revendications 4 à 11.

13. Machine selon la revendication 12, **caractérisée en ce qu'**elle comprend un bâti (3) et une série de groupes d'impression disposés en aval de la station d'alimentation (4).

## Patentansprüche

1. Verfahren zum Versorgen einer Maschine zur Verarbeitung von Plattenelementen (2) mit Plattenelementen (1) ausgehend von einem anfänglichen Stapel von Elementen (6), umfassend die Schritte, die darin bestehen:
- ein erstes Paket von Elementen (11) stromabwärts ausgehend von der Oberseite des Stapels (6) zu schieben (P), bis das erste Paket (11) zu den Lagermitteln (12) gelangt, die geeignet sind, das erste geschobene Paket (11) zu lagern, und gleichzeitig
- die Lagermittel (12) stromabwärts über eine bestimmte Entfernung zu bewegen (D), die der Länge des ersten Pakets (11) entspricht, um das erste Paket (11) des Stapels (6) zu trennen, dann
- die Elemente (1) des ersten Pakets (11) nacheinander bis zu der Maschine (2) zu transferieren (F).

2. Verfahren nach Anspruch 1, **dadurch gekennzeichnet, dass** es weiter die zusätzlichen Schritte umfasst, die nach dem Schritt platziert sind, der darin besteht, die Elemente (1) zu transferieren (F), und darin bestehen:
- die Höhe der Lagermittel (12) auf eine Höhe (H) abzusenken, die der Dicke einer nachfolgenden Packung (19) entspricht, und
- den Stapel (6) auf eine Höhe anzuheben, die der Dicke der nachfolgenden Packung (19) entspricht.

3. Verfahren nach Anspruch 1 oder 2, **dadurch gekennzeichnet, dass** es weiter die zusätzlichen Schritte umfasst, die nach dem Schritt, der darin besteht die Elemente (1) zu transferieren (F), plaziert sind, und darin bestehen:
- ein nachfolgendes Paket (19) stromabwärts um eine Strecke, die der Länge der nachfolgenden Packung (19) entspricht, zu verschieben (P2), um das nachfolgende Packet (19) von dem Stapel (6) zu trennen,
- den Stapel (6) auf eine Höhe anzuheben, die der Dicke der nachfolgenden Packung (19) entspricht, und gleichzeitig die Elemente (1) zu transferieren, und
- die Schritte zu wiederholen, die darin bestehen, das nachfolgende Paket (19) zu schieben (P2) und den Stapel (6) anzuheben, bis der Stapel (6) beendet ist.

4. Station zur Versorgung einer Maschine zur Verarbeitung von Plattenelementen (2) mit Plattenelementen (1) ausgehend von einem Ausgangsstapel (6) von in einem Magazin (7) angeordneten Elementen (1), umfassend:
- einen Schieber (9), der geeignet ist, ein Paket von Elementen (11) stromabwärts (P) ausgehend von der Oberseite des Stapels (6) zu schieben,
- Lagermittel (12), die geeignet sind, das Paket (11) zu lagern, und stromabwärts von dem Schieber (9) positioniert sind, und
- Transfermittel (14), die geeignet sind, die Elemente (1) nacheinander ausgehend von der Lagereinrichtung (12) bis zu der Maschine (2) zu transferieren (F),
**dadurch gekennzeichnet, dass** sie Verschiebungsmittel (16) umfasst, die geeignet sind, gleichzeitig von stromaufwärts nach stromabwärts die Lagermittel (12) und die Transfermittel (14) über eine Strecke zu bewegen, die der Länge des Pakets (11) entspricht, um es dem Schieber (9) und den Lagermitteln (12) zu ermöglichen, das Paket (11) von dem Stapel (6) zu trennen und das Paket (11) bei den Lagermitteln (12) und den Transfermitteln (14) aufzubewahren.

5. Station nach Anspruch 4, **dadurch gekennzeichnet, dass** sie Mittel (17) zum Stützen des Pakets (11) umfasst, die zwischen dem Schieber (9) und den Lagermitteln (12) positioniert sind und geeignet sind, sich abhängig von der Länge des Pakets (11) zu entfalten.

6. Station nach Anspruch 4 oder 5, **dadurch gekennzeichnet, dass** sie Mittel (18) zum Verändern der Höhe (H) der Lagermittel (12), der Transfermittel (14) und des Pakets (11) abhängig von der Dicke des nachfolgenden Pakets (19) umfasst.

7. Station nach einem der Ansprüche 4 bis 6, **dadurch gekennzeichnet, dass** sie einen Förderer (21) mit variabler Länge aufweist, der stromabwärts von den Lager- und Transfermitteln (12, 14) positioniert ist und eine Länge aufweist, die abhängig von der Länge des Pakets (11) ist.

8. Station nach Anspruch 7, **dadurch gekennzeichnet, dass** die Mittel (18) zum Verändern der Höhe der Lagermittel (12) geeignet sind, das Transfermittel (14), die Lagermittel (12) und den Förderer (21) bezogen auf eine Achse zu schwenken (R), die sich am stromabwärtigen Ende des Förderers (21) befindet.

9. Station nach einem der Ansprüche 4 bis 8, **dadurch gekennzeichnet, dass** die Lagermittel (12) in Form einer vorderen Positioniereinrichtung (13) ausgebildet sind, um eine Blockierung des Pakets (11, 19) beizubehalten.

10. Station nach einem der Ansprüche 4 bis 9, **dadurch gekennzeichnet, dass** die Lagermittel (12) an den Transfermitteln (14) befestigt sind.

11. Station nach einem der Ansprüche 4 bis 10, **dadurch gekennzeichnet, dass** das Magazin (7) einen Mechanismus zum Anheben des Stapels (6) umfasst, der geeignet ist, eine Plattform zum Anheben (8) von einem Stapel (6) vertikal anzuheben.

12. Maschine zur Bearbeitung für Plattenelemente, **dadurch gekennzeichnet, dass** sie mit einer Station zur Versorgung (4) nach einem der Ansprüche 4 bis 11 ausgestattet ist.

13. Maschine nach Anspruch 12, **dadurch gekennzeichnet, dass** sie ein Gestell (3) und eine Reihe von Druckgruppen umfasst, die stromabwärts von der Station zur Versorgung (4) angeordnet sind.

## Claims

1. Method for feeding sheet elements (1) to a machine for treating sheet elements (2), from an initial stack (6) of elements, comprising the steps consisting in:
- pushing (P) a first batch of elements (11) downstream, from the top of the stack (6), until the first batch (11) arrives at storage means (12) that are able to store the first pushed batch (11), and at the same time,
- moving (D) the storage means (12) downstream over a determined distance corresponding to the length of the first batch (11), in order to separate the first batch (11) from the stack (6), then
- transferring (F) the elements (1) of the first batch (11) one after another to the machine (2).

2. Method according to claim 1, **characterised in that** it further comprises the additional steps, placed after the step consisting in transferring (F) the elements (1), consisting in:
- lowering the height of the storage means (12) according to a height (H) corresponding to the thickness of a later batch (19), and
- raising the stack (6) according to a height corresponding to the thickness of the later batch (19).

3. Method according to claim 1 or 2, **characterised in that** it further comprises the additional steps, placed after the step consisting in transferring (F) the elements (1), consisting in:
- pushing (P2) a later batch (19) downstream over a distance corresponding to the length of the later batch (19), in order to separate the later batch (19) from the stack (6),
- raising the stack (6) according to a height corresponding to the thickness of the later batch (19), and at the same time transferring the elements (1), and
- repeating the steps consisting in pushing (P2) the later batch (19) and raising the stack (6), until the stack (6) is completed.

4. Station for feeding a machine for treating sheet elements (2) with sheet elements (1), from an initial stack (6) of elements (1) arranged in a magazine (7), comprising:
- a pusher (9), able to push downstream (P) a batch of elements (11), from the top of the stack (6),
- storage means (12), able to store the batch (11), and positioned downstream from the pusher (9), and
- transfer means (14), able to transfer (F) the elements (1) one after another, from storage means (12) to the machine (2),
**characterised in that** it comprises displacement means (16), able to simultaneously displace from upstream to downstream the storage means (12) and the transfer means (14) over a distance corresponding to the length of the batch (11), in such a way as to allow the pusher (9) and the storage means (12) to separate the batch (11) from the stack (6) and to retain the batch (11) on storage means (12) and transfer means (14).

5. Station according to claim 4, **characterised in that** it comprises means (17) for supporting the batch (11), positioned between the pusher (9) and the storage means (12), and able to be deployed according to the length of the batch (11).

6. Station according to claim 4 or 5, **characterised in that** it comprises means (18) for varying the height (H) of the storage means (12), of the transfer means (14) and of the batch (11), according to the thickness of the later batch (19).

7. Station according to any of claims 4 to 6, **characterised in that** it comprises a variable-length transporter (21), positioned downstream from the storage and transfer means (12, 14), and having a length which is according to the length of the batch (11).

8. Station according to claim 7, **characterised in that** the means (18) for varying the height of the storage means (12) are able to pivot (R) the transfer means (14), the storage means (12) and the transporter (21), with respect to an axis located at the downstream end of the transporter (21).

9. Station according to any of claims 4 to 8, **characterised in that** the storage means (12) have the form of a front positioning member (13), in such a way as to maintain a blocking of the batch (11, 19).

10. Station according to any of claims 4 to 9, **characterised in that** the storage means (12) are integral with the transfer means (14).

11. Station according to any of claims 4 to 10, **characterised in that** the magazine (7) comprises a stack elevating mechanism (6), able to vertical raise a stack (6) elevating platform (8).

12. Machine for treating sheet elements, **characterised in that** it is provided with a feed station (4) according to any of claims 4 to 11.

13. Machine according to claim 12, **characterised in that** it comprises a frame (3) and a series of printing groups arranged downstream from the feed station (4).
